# EUROPEAN PATENT SPECIFICATION

(11) **EP 2 093 950 B1**
(45) Date of publication and mention of the grant of the patent: **31.07.2013**
(21) Application number: 08846106.6
(22) Date of filing: 22.10.2008
(51) Int. Cl.: H04L 12/46

(54) **A METHOD AND DEVICE FOR REALIZING AUTOMATICAL DISTRIBUTION OF QinQ BUSINESS LABEL TERMINAL TO TERMINAL**
EIN VERFAHREN UND GERÄT ZUR BEREITSTELLUNG AUTOMATISCHER VERTEILUNG VON QinQ GESCHÄFTSETIKETTEN VON ENDGERÄT ZU ENDGERÄT
PROCÉDÉ ET DISPOSITIF POUR RÉALISER UNE DISTRIBUTION AUTOMATIQUE D'ÉTIQUETTE DE TRAVAIL QINQ TERMINAL À TERMINAL

(30) Priority: 22.10.2007 CN 200710167326
(43) Date of publication of application: 26.08.2009
(73) Proprietor: Huawei Technologies Co., Ltd., Longgang District, Shenzhen Guangdong 518129 (CN)
(72) Inventor: DONG, Zhe, Guangdong 518129 (CN)
(74) Representative: Isarpatent
(86) International application number: PCT/CN2008/072780
(87) International publication number: WO 2009/056039

(56) References cited:
- EP-A1- 1 670 187
- EP-A2- 1 244 254
- EP-A2- 1 838 129
- WO-A1-2007/069194
- CN-A- 1 571 377
- CN-A- 1 960 336
- CN-A- 101 005 437
- CN-A- 101 150 482
- "B-PON OMCI support for IP, ISDN, video, VLAN tagging, VC cross-connections and other select functions; G.983.8 (03/03)" ITU-T STANDARD WITHDRAWN (W), INTERNATIONAL TELECOMMUNICATION UNION, GENEVA, CH, no. G.983.8 (03/03), 16 March 2003 (2003-03-16), XP017404676

## Description

### Field of the Invention

The present invention relates to data transmission technologies, and in particular, to a method and apparatus for distributing end-to-end QinQ service tags automatically.

### Background of the Invention

802.1 Q in 802.1 Q (QinQ, a VLAN dual stacking technology) emerges as a result of the Virtual Local Area Network (VLAN). The VLAN is a local area network technology that emerges with the development of the Ethernet switching technology. As the Ethernet technology is deployed massively in a service provider network, namely, a metropolitan area Ethernet, using the 802.1 Q VLAN to isolate and identify the users is restricted drastically because the VLAN tag field defined in IEEE802.1Q includes only 12 bits and represents only 4K VLANs, which are not enough for identifying numerous users in a metropolitan area Ethernet.

To apply the VLAN technology in the new network environment further, it is necessary to use the VLAN to identify a large number of users. Therefore, the QinQ technology emerges. The QinQ technology adds a layer of 802.1Q tag on the basis of the existing 802.1Q packet. This dual stacking technology increases the quantity of identifiable VLANs to 4K*4K. With the development of the metropolitan area Ethernet and the intensive operation requirement of the service provider, the application of the QinQ dual-layer tag is extended so that the inner tag and the outer tag represent different information. The inner tag represents a customer VLAN, called "C-VLAN", and the outer layer represents a service VLAN, called "S-VLAN".

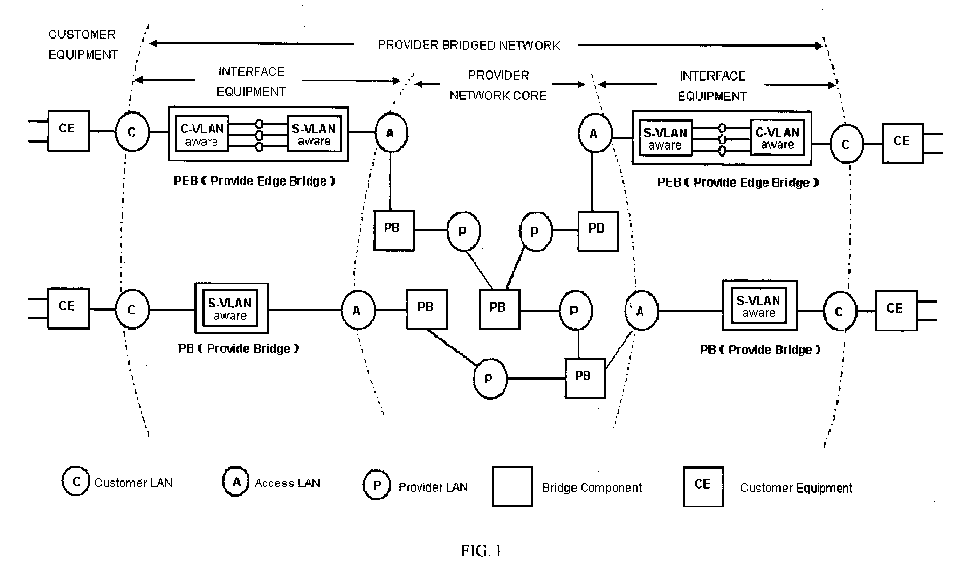

FIG. 1 shows a process of performing QinQ encapsulation for the user data, and transmitting and identifying the user data in the prior art. After the user data arrives at the Provider Edge Bridge (PEB) device at the core network edge, the network system affixes a distinct outer S-VLAN tag to each specific C-VLAN tag, or performs QinQ encapsulation based on the port. That is, the single-layer 802.1Q packet is converted into a dual-layer 802.1Q packet. The QinQ packet carries both the C-VLAN tag and the S-VLAN tag and enters the core network of the service provider. The core network of the service provider transmits the inner C-VLAN tag transparently. The Provider Bridge (PB) device in the core network transmits the QinQ packet transparently, or identifies the S-VLAN tag, and performs tag switching for the S-VLAN tag before transmitting the packet. After the QinQ packet arrives at the PEB device at the core network edge, the PEB device identifies the QinQ packet, strips the S-VLAN tag, and terminates the QinQ packet.

From the perspective of activating the QinQ service, the VLAN tag operation mode in the foregoing process as well as the handling of the values of the C-VLAN tag and the S-VLAN tag in different operation modes are as follows:

(1) At the source node, when the user data packet arrives at the PEB device at the core network edge, possible VLAN tag operation modes as well as the handling of the values of the C-VLAN tag and the S-VLAN tag in different operation modes are to:
identify different C-VLAN tags and affix an S-VLAN tag, in which case an S-VLAN tag value needs to be specified;
identify different C-VLAN tags, switch the C-VLAN tags and then affix an S-VLAN tag, in which case a C-VLAN tag value and an S-VLAN tag value need to be specified; and affix two layers of tags to the user data packet that carries no 802.1 Q tag, and affix an S-VLAN tag after affixing a C-VLAN tag, in which case a C-VLAN tag value and an S-VLAN tag value need to be specified.

(2) At the sink node, when the QinQ packet is transmitted through the network to the PEB device at the core network edge, possible VLAN tag operation modes as well as the handling of the values of the C-VLAN tag and the S-VLAN tag in different operation modes are to:
identify different C-VLAN tags and strip the S-VLAN tag, in which case an S-VLAN tag value needs to be specified;
identify different C-VLAN tags, switch the C-VLAN tags and then strip the S-VLAN tag, in which case a C-VLAN tag value and an S-VLAN tag value need to be specified; and
identify two layers of tags in the QinQ packet, and strip the C-VLAN tag and the S-VLAN tag, in which case a C-VLAN tag value and an S-VLAN tag value need to be specified.

(3) At the intermediate node, the PB device transmits the QinQ packet transparently in the core network.

(4) At the intermediate node, in the core network, the PB device identifies the S-VLAN tag in the QinQ packet and performs S-VLAN tag switching, in which case an S-VLAN tag value needs to be specified.

From the perspective of end-to-end QinQ service requirements, the VLAN tag operation modes and the tag value assignments enumerated in foregoing (1) and (2) occur at the source node and the sink node of the end-to-end QinQ service; and the VLAN tag operation modes and the tag value assignments enumerated in foregoing (3) and (4) occur at the intermediate node of the end-to-end QinQ service. For an end-to-end QinQ service, each node traversed by the service operates the VLAN tag of the packet in a unique mode, and it is necessary to select a VLAN tag operation mode for the current QinQ service for each node among several possible VLAN tag operation modes.

Besides, for the intermediate node and the sink node, if the tag switching operation (or tag forwarding, or tag stripping) needs to be performed on the current node, it is necessary to specify the tag values before and after the switching (or tag forwarding or tag stripping). For example, in the operation of "stripping the S-VLAN tag after switching the C-VLAN tag", it is necessary to specify: the C-VLAN tag value before the C-VLAN tag switching, the C-VLAN tag value after the C-VLAN tag switching, and the S-VLAN tag value to be stripped.

In fact, in an end-to-end QinQ service, the tag value before switching (or tag forwarding, or tag stripping) in the downstream node may be obtained from the service configuration of the upstream node. For example, the C-VLAN tag at this time and the S-VLAN tag before switching are the C-VLAN tag and the S-VLAN tag in the operation of "affixing the S-VLAN tag after switching the C-VLAN tag" on the source node.

In the prior art, in the process of creating an end-to-end path of the QinQ service, a network operator needs to specify a VLAN tag operation mode for all the nodes traversed by the data packet on the transmission path. Afterward, it is necessary to input a C-VALN tag value or an S-VLAN tag value manually according to the VLAN tag operation mode. In this way, the end-to-end path of the QinQ service is created successfully.

The defects of the prior art are: The network operator needs to manually select a VLAN tag operation mode for each node traversed by the data packet on the transmission path among multiple possible VLAN tag operation modes, and needs to configure a C-VALN tag value or an S-VLAN tag value manually. The manual operation is troublesome and is vulnerable to errors. In view of the existing service transmission mode, in the process of selecting and specifying the tag manually, once the network operator makes an operation mistake for a node, the network operator cannot discover the end-to-end service failure or the VLAN tag operation error until the service configuration on all the nodes is completed. In this case, the network operator has to check the configuration data from node to node to locate the node where the error occurs.
EP 1838129 discloses a method for Optical Network Terminal processing of Ethernet message.
EP 1244254 discloses a Virtual Local Area Network classification and tagging system for a switching node.
EP 1670187 discloses a Virtual Local Area Network tagging method employed in a data communications switching device.

### Summary of the Invention

A method and apparatus for distributing end-to-end QinQ service tags automatically are provided in embodiments of the present invention.

A method for distributing end-to-end QinQ service tags automatically in an embodiment of the present invention includes:
determining a source node and a sink node in an end-to-end QinQ service path, and a Virtual Local Area Network, VLAN, tag operation mode and a VLAN tag value of the source node, wherein a first VLAN tag operation mode set comprises tag switching, tag forwarding, and tag stripping; and
if a node is not the sink node, acquiring, by a Network Management System (NMS), a second VLAN tag operation mode set for the node by filtering out the VLAN tag operation mode, which can not be applied to the node, from the first VLAN tag operation mode set according to the VLAN tag operation mode of an upstream node, selecting a VLAN tag operation mode from the second VLAN tag operation mode set for the node, obtaining a VLAN tag value automatically according to the VLAN tag operation mode of the upstream node and the selected VLAN tag operation mode, and filling the obtained VLAN tag value into service configuration; or
if a node is the sink node, determining, by the NMS, a VLAN tag operation mode according to a one-to-one correspondence between the VLAN tag operation mode of the source node and the VLAN tag operation mode of the sink node, obtaining a VLAN tag value automatically according to a VLAN tag operation mode of an upstream node and the determined VLAN tag operation mode, and filling the obtained VLAN tag value into service configuration.

Compared with the prior art, the present invention has these merits: The VLAN tag operation mode set applicable to the current node is filtered out according to analysis about the VLAN tag operation mode of the upstream node; a VLAN tag operation mode is selected for the current node among the set; and the VLAN tag value is obtained automatically according to the tag operation modes of the two nodes and filled into the service configuration. Therefore, the probability of errors caused by manual selection of the VLAN tag operation mode for the current node is reduced, and the tag operation process is simplified, especially when a lot of tag operations are involved.

### Brief Description of the Drawings

FIG. 1 shows a process of performing QinQ encapsulation for the user data and transmitting and identifying the user data in the prior art;

FIG. 2 is a flowchart of a method for distributing end-to-end QinQ service tags automatically in a first embodiment of the present invention;

FIG. 3 is a flowchart of a method for distributing end-to-end QinQ service tags automatically in a second embodiment of the present invention;

FIG. 4 is a block diagram of an apparatus for distributing end-to-end QinQ service tags automatically in the first embodiment of the present invention; and

FIG. 5 is a block diagram of an apparatus for distributing end-to-end QinQ service tags automatically in the second embodiment of the present invention.

### Detailed Description of the Invention

The embodiments of the present invention are detailed below with reference to accompanying drawings.

In the embodiments of the present invention, the VLAN tag operation mode of the source node corresponds to the VLAN tag operation mode of the sink node uniquely. The mapping is shown in the following table:

| **VLAN Tag Operation Mode of Source Node** | **VLAN Tag Operation Mode of Sink Node** |
|---|---|
| Affixing two layers of tags to the user data packet that carries no 802.1 Q tag | Identifying and stripping the two layers of tags on the QinQ packet |
| Identifying different C-VLAN tags and affixing an S-VLAN tag | Identifying different C-VLAN tags and stripping the S-VLAN tag |
| Identifying different C-VLAN tags, switching the C-VLAN tags, and then affixing an S-VLAN tag | Identifying different C-VLAN tags, switching the C-VLAN tags, and then stripping an S-VLAN tag |

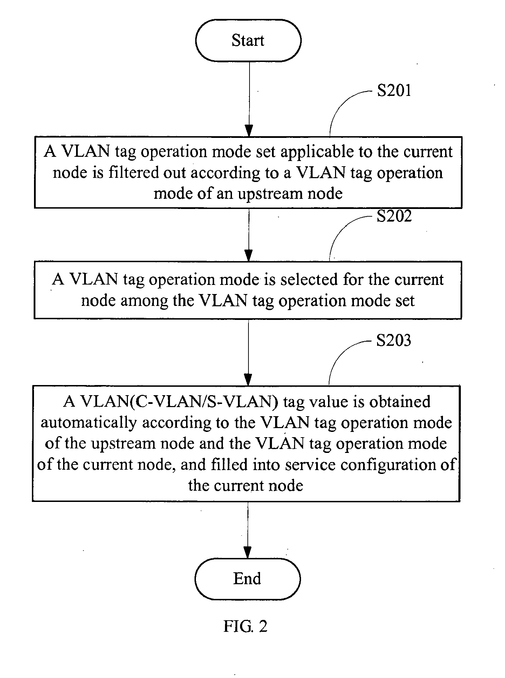

FIG. 2 is a flowchart of a method for distributing end-to-end QinQ service tags automatically in the first embodiment of the present invention. The method includes the following steps:

S201: According to the VLAN tag operation mode of the upstream node, a Network Management System (NMS) filters out the currently applicable VLAN tag operation mode set. VLAN tag operation modes include: tag switching, tag forwarding, and tag stripping. Through filtering of the VLAN tag operation mode set, the inapplicable VLAN tag operation modes are excluded, and the proper VLAN tag operation mode is selected from a smaller scope, thus improving the configuration efficiency and reducing the possibility of tag operation errors. If the VLAN tag operation mode is specified incorrectly on the source node or other upstream nodes, the VLAN tag operation mode automatically filtered out by the NMS on the current node is not expected. In this case, the network operator may easily discover the error. Because the operation mode of each node is in a mapping, the NMS discovers the error once the operation mode of the upstream node is incorrect, thus making it convenient to correct the errors. After the VLAN tag operation mode set is generated through filtering, a judgment may be made about whether the VLAN tag operation mode set is null. If the VLAN tag operation mode set is null, it is indicated that the tag operation of the upstream node is incorrect; and, if the VLAN tag operation mode set is not null, it is indicated that the tag operation of the upstream node is correct, and the process proceeds to step S202.

S202: In the VLAN tag operation mode set, a VLAN tag operation mode is selected for the current node. The selection mode may be selected by the network operator manually, or selected by the NMS automatically according to presetting. The selection mode does not fall beyond the scope of protection of the present invention.

S203: A VLAN(C-VLAN/S-VLAN) tag value is obtained automatically according to the VLAN tag operation mode of the upstream node and the VLAN tag operation mode of the current node, and filled into service configuration of the current node. For the tag value before the tag operation, for example, before tag switching, tag forwarding or tag stripping, in the current node, the system may fill the tag value into the configuration of the current node automatically according to the tag value in the service configuration of the upstream node, thus simplifying the configuration operation, avoiding unnecessary errors, improving the configuration efficiency, and reducing the probability of configuration errors.

Through the embodiments of the present invention, the NMS filters out an applicable VLAN tag operation mode set automatically according to the VLAN tag operation mode of the upstream node; the NMS selects a VLAN tag operation mode for the current node among the VLAN tag operation mode set, or the network operator selects a VLAN tag operation mode manually; and the VLAN tag value is obtained according to the VLAN tag operation modes of the upstream node and the current node, and filled into service configuration of the current node automatically. Compared with the prior art, the method under the present invention enables automatic generation of a VLAN tag operation mode set, and the operation mode of the current node is selected from the set, thus avoiding the high error ratio caused by manual selection of a VLAG tag operation mode among various possible VLAN tag operation modes. Besides, a VLAN (C-VLAN/S-VLAN) tag value is obtained automatically according to the VLAN tag operation modes of the upstream node and the current node, and filled into service configuration of the current node. The present invention avoids the trouble of the network operator specifying a VLAN tag operation mode for each node beforehand among multiple possible VLAN tag operation modes and then configuring the C-VALN tag value or S-VLAN tag value manually according to the selected VLAN tag operation mode. Moreover, the manual selection process needs to be repeated for each node according to the requirements of the current node. When there are a large number of nodes, the workload of selecting the VLAN tag operation mode, and switching, forwarding and stripping the tags is heavy. If the workload relies on the manual operation of the network operator completely, the probability of errors is high. Furthermore, once the network operator makes an operation mistake for a node, the network operator cannot discover the service failure or the configuration error until the service configuration on all the nodes is completed. In this case, the network operator has to check the configuration data from node to node to locate the node where the error occurs.

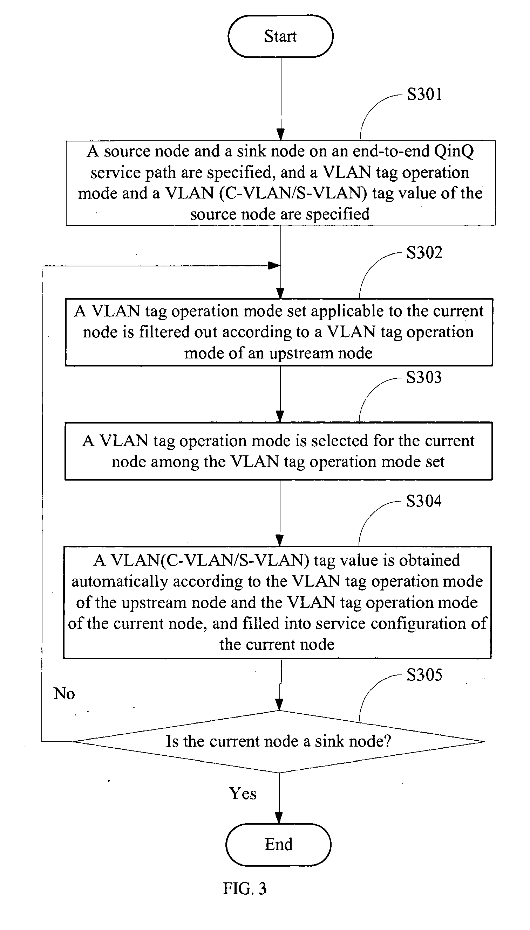

FIG. 3 is a flowchart of a method for distributing end-to-end QinQ service tags automatically in the second embodiment of the present invention. In this embodiment, the VLAN tag operation modes of the source node, the intermediate node and the sink node as well as the mapping between them are shown in the following table:

| **VLAN Tag Operation Mode of Source Node** | **VLAN Tag Operation Mode of Intermediate Node (Core Network Node)** | **VLAN Tag Operation Mode of Sink Node** |
|---|---|---|
| (1) Two layers of tags are affixed to the user datapacket that carriesno 802.1Q tag; and | | (1) The two layers of tags in the QinQ packet are identified and stripped; and |
| | (1) The QinQ packet istransmitted transparently; and | (2) The system uses the C-VLAN tag value and S-VLAN tag value in the service configuration of the source node as the C-VLAN tag value and S-VLAN tag value on the sink node; and no manual input of the network operator is required. |
| (2) It is necessary to configure the C-VLAN tag | (2) It is not necessary to specify the tag value. | |
| value and the S-VLAN tag value manually. | (1) The S-VLAN tag is identified and switched; and | (1) The two layers of tags on the QinQ packet are identified and stripped; and |
| | (2) The system uses the S-VLAN tag value in the service configuration of the source node as the S-VLAN tag value on the current node, and the network operator needs to configure only the after-switching S-VLAN tag value. | (2) The system uses the C-VLAN tag value in the service configuration of the source node and the after-switching S-VLAN tag value on the previous-hop core network node as the C-VLAN tag value and S-VLAN tag value on the sink node respectively; and no manual input of the network operator is required. |
| (1) Different C-VLAN tags are identified and an S-VLAN tag is affixed; and | (1) The QinQ packet is transmitted transparently; and | (1) Different C-VLAN tags are identified, and the S-VLAN tag is stripped; and |
| | (2) It is not necessary to specify the tag value. | (2) The system uses the C-VLAN tagvalue and S-VLAN tag value in the service configuration of the source node as the C-VLAN tag value and S-VLAN tag value on the sink node; and no manual input of the network operator is required. |
| (2) It is necessary to configure the C-VLAN tag value and the S-VLAN tag value manually. | (1) The S-VLAN tag is identified and switched; and | (1) Different C-VLAN tags are identified, and the S-VLAN tag is stripped; and |
| | (2) The system uses theS-VLAN tag value in theservice configuration of the source node as the before-switching S-VLAN tag value on the current node, and the network operator needs to configure only the after-switching S-VLAN tag value. | (2) The system uses the C-VLAN tagvalue in the service configuration of the source node and the after-switching S-VLAN tag value on the previous-hop core network node as the C-VLAN tag value and S-VLAN tag value on the sink node respectively; and no manual input of the network operator is required. |
| (1) Different C-VLAN tags are identified and switched, and then the S-VLAN tag is affixed; and | (1) The QinQ packet is transmitted transparently; and | (1) Different C-VLAN tags are identified and switched, and then the S-VLAN tag is stripped; and |
| | (2) It is not necessary to specify the tag value. | (2) The system uses theafter-switching C-VLAN tag valueand S-VLAN tag value in the service configuration of the source node as the C-VLAN tag value and S-VLAN tag value on the sink node; and no manual input of the network operator is required. |
| (2) It is necessary to manually configure the C-VLAN tag value before and after switching and the S-VLAN tag value. | (1) The S-VLAN tag is identified and switched; and | (1) Different C-VLAN tags are identified are switched, and then the S-VLAN tag is stripped; and |
| | (2) The system uses theS-VLAN tag value in theservice configuration of the source node as the before-switching S-VLAN tag value on the current node, and the network operator needs to configure only the after-switching S-VLAN tag value. | (2) The system uses theafter-switching C-VLAN tag value inthe service of the configuration source node and the after-switching S-VLAN tag value on the previous-hop core network node as the C-VLAN tag value and S-VLAN tag value on the sink node respectively; and no manual input of the network operator is required. |

On the basis of the VLAN tag operation modes of all nodes as well as the mapping between them, the second embodiment of the method under the present invention includes the following steps:

S301: A source node and a sink node on an end-to-end QinQ service path are specified, and a VLAN tag operation mode and a VLAN (C-VLAN/S-VLAN) tag value of the source node are specified; thus a transmission path from the source node to the sink node in the network is specified; the VLAN tag operation mode of the source node and the VLAN (C-VLAN/S-VLAN) tag value need to be specified beforehand.

S302: According to the VLAN tag operation mode of the upstream node, the NMS filters out the VLAN tag operation mode set applicable to the current node. According to the VLAN tag operation mode of the upstream node, the NMS analyzes the VLAN tag operation modes applicable to the current node and filters the inapplicable VLAN tag operation modes, and then displays the applicable VLAN tag operation modes to the network operator for selection. The NMS displays the VLAG tag operation modes to the network operator in read-only mode or other modes. The VLAG tag operation modes may be displayed on the operating interface of the NMS as an alert against maloperation. The VLAN tag operation modes include: tag switching, tag forwarding, and tag stripping. The VLAN tag operation mode set is filtered out, and the inapplicable VLAN tag operation modes are excluded. Therefore, the proper VLAN tag operation mode may be selected from a smaller scope, thus improving the configuration efficiency and reducing the possibility of tag operation errors.

S303: In the VLAN tag operation mode set, a VLAN tag operation mode is selected for the current node. The selection mode may be selected by the network operator manually, or selected by the NMS automatically according to presetting. The selection mode does not fall beyond the scope of protection of the present invention.

S304: According to the VLAN tag operation modes of the upstream node and the current node as well as the C-VLAN/S-VLAN tag value in the configuration of the upstream node, the NMS automatically fills the C-VLAN/S-VLAN tag value used by the upstream node into the configuration of the current node in view of the mapping in the foregoing table. That is, the NMS automatically obtains the VLAN (C-VLAN/S-VLAN) tag value and fills it into the service configuration of the current node. For the tag value before the tag operation, for example, before tag switching, tag forwarding or tag stripping, in the current node, the system may fill the tag value into the configuration of the current node automatically according to the tag value in the service configuration of the upstream node, thus simplifying the configuration operation, avoiding unnecessary errors, improving the configuration efficiency, and reducing the probability of configuration errors.

S305: The NMS judges whether the current node is a sink node. If the current node is a sink node, the process is ended; otherwise, the process proceeds to step S302, where the NMS continues filtering out a new VLAN tag operation mode set applicable to the current node according to the VLAN tag operation modes of the upstream node and the current node.

Through the embodiments of the present invention, the VLAN tag operation mode set applicable to the current node is filtered out according to analysis about the VLAN tag operation mode of the upstream node; a VLAN tag operation mode is selected for the current node among the set; and the VLAN tag value is obtained automatically according to the tag operation modes of the two nodes and filled into the service configuration. Therefore, the high error rate caused by manual selection of the VLAN tag operation mode for the current node is avoided, and the tag operation process is simplified, especially when many tag operations are involved. When the current node is a sink node, the process is ended; otherwise, the NMS continues filtering out a new VLAN tag operation mode set applicable to the current node, which is conducive to the core network with a large number of intermediate nodes.

To those skilled in the art, it is understandable that the source node and the sink node are relative concepts in the application process of the present invention, and are sorted from the perspective of the data flow direction. A source node in one data flow direction may be a sink node in another data flow direction.

The VLAN tag operation mode of the node in the embodiments of the present invention and the corresponding VLAN tag value may be recorded in the NMS, or may be transmitted and queried dynamically so long as the NMS is aware of the VLAN tag operation mode of the upstream node and the corresponding tag value.

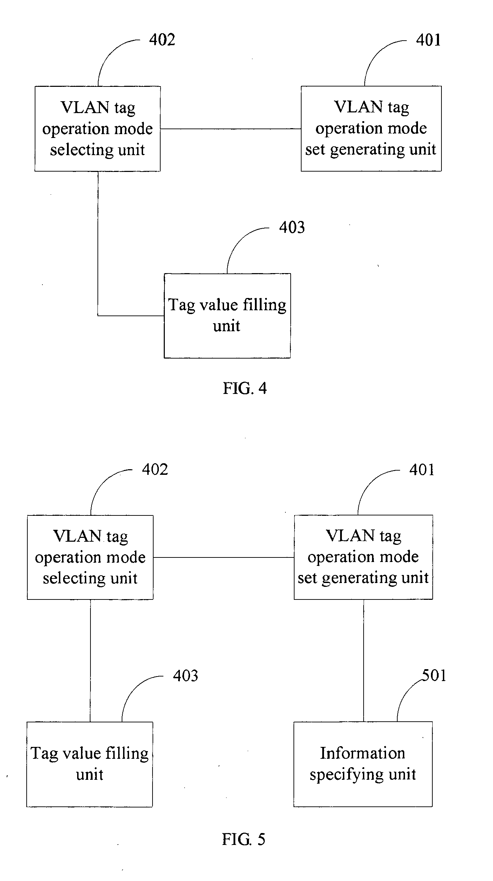

FIG. 4 is a block diagram of an apparatus for distributing end-to-end QinQ service tags automatically in the first embodiment of the present invention. The apparatus includes:
a VLAN tag operation mode set generating unit 401, configured to filter out an applicable VLAN tag operation mode set according to a VLAN tag operation mode of an upstream node;
a VLAN tag operation mode selecting unit 402, configured to: select a VLAN tag operation mode from the VLAN tag operation mode set, and send the selected VLAN tag operation mode; and
a tag value filling unit 403, configured to: obtain a VLAN (C-VLAN/S-VLAN) tag value automatically according to the VLAN tag operation mode of the upstream node and the VLAN tag operation mode sent by the VLAN tag operation mode selecting unit 402, and fill the obtained tag value into service configuration.

Through the apparatus under the present invention, the VLAN tag operation mode set applicable to the current node is filtered out according to analysis about the VLAN tag operation mode of the upstream node; a VLAN tag operation mode is selected for the current node among the set; and the VLAN tag value is obtained automatically according to the tag operation modes of the two nodes and filled into the service configuration. Therefore, the high error rate caused by manual selection of the VLAN tag operation mode for the current node is avoided, and the tag operation process is simplified, especially when many tag operations are involved.

On the basis of the foregoing embodiment, to alert the network operator in the configuration process, the apparatus further includes: a tag value displaying unit, configured to display the VLAN (C-VLAN/S-VLAN) tag value to the network operator.

FIG. 5 is a block diagram of an apparatus for distributing end-to-end QinQ service tags automatically in the second embodiment of the present invention. Compared with the first embodiment, the second embodiment provides the following additional unit:
an information specifying unit 501, connected to the VLAN tag operation mode set generating unit 401, and configured to specify the source node and the sink node on the end-to-end QinQ service path, the VLAN tag operation mode of the source node, and the VLAN (C-VLAN/S-VLAN) tag value.

On the basis of the foregoing embodiment, this apparatus further includes a sink node judging unit. The sink node judging unit is connected to the VLAN tag operation mode set generating unit 401 and the information specifying unit 501, and is configured to: judge whether the apparatus is a sink node specified by the information specifying unit 501; and trigger the VLAN tag operation mode set generating unit 401 to filter out a new applicable VLAN tag operation mode set if the apparatus is not a sink node.

On the basis of the foregoing embodiment, to prevent the VLAN tag operation mode set of the current node from being null as a result of tag operation errors of the upstream node, the apparatus may further include:
an upstream node tag operation error alerting unit, connected to the VLAN tag operation mode set generating unit 401, and configured to give an alert about tag operation errors of the upstream node if the VLAN tag operation mode set is null.

The information interaction between units and the operation process of the foregoing apparatus are the same as the counterpart in the method embodiment above, and are not described further.

From the foregoing embodiments, those skilled in the art are clearly aware that the present invention may be implemented through hardware, or through software in addition to a necessary universal hardware platform. In most circumstances, it is better to implement the present invention through software in addition to a necessary universal hardware platform. Therefore, the essence of the technical solution under the present invention or the contributions to the prior art may be embodied as a software product. The software product is stored in a storage medium, and includes several instructions that enable a computer device such as a personal computer, a server, or a network device to perform the methods provided in the embodiments of the present invention.

The foregoing embodiments of the present invention do not constitute any limitation to the scope of protection of the present invention. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for automatically distributing end-to-end 802.1Q in 802.1Q, QinQ, service tags, comprising:
determining (S301) a source node and a sink node in an end-to-end QinQ service path, and a Virtual Local Area Network, VLAN, tag operation mode and a VLAN tag value of the source node, wherein a first VLAN tag operation mode set comprises tag switching, tag forwarding, and tag stripping; and
if a node is not the sink node (S305) acquiring, by a Network Management System (NMS), a second VLAN tag operation mode set for the node by filtering out (S201, S302) the VLAN tag operation mode, which can not be applied to the node, from the first VLAN tag operation mode set according to the VLAN tag operation mode of an upstream node, selecting (S202, S303) a VLAN tag operation mode from the second VLAN tag operation mode set for the node, obtaining (S203, S304) a VLAN tag value automatically according to the VLAN tag operation mode of the upstream node and the selected VLAN tag operation mode, and filling (S203, S304) the obtained VLAN tag value into service configuration; or
if a node is the sink node, determining, by the NMS, a VLAN tag operation mode according to a one-to-one correspondence between the VLAN tag operation mode of the source node and the VLAN tag operation mode of the sink node, obtaining (S203, S304) a VLAN tag value automatically according to a VLAN tag operation mode of an upstream node and the determined VLAN tag operation mode, and filling (S203, S304) the obtained VLAN tag value into service configuration.

2. The method according to claim 1, wherein after the VLAN tag value is obtained automatically and filled into the service configuration, the method further comprises:
displaying the VLAN tag value to a network operator.

3. The method according to claim 2, wherein the displaying of the VLAN tag value to the network operator is:
displaying the VLAN tag value onto an operating interface of the NMS, in read-only mode.

4. The method according to claim 1, wherein the selecting the VLAN tag operation mode from the second VLAN tag operation mode set comprises:
selecting, by a network operator manually, a VLAN tag operation mode from the second VLAN tag operation mode set; or
selecting, by the NMS, automatically, a VLAN tag operation mode from the second VLAN tag operation mode set.

5. The method according to claim 1, comprising: giving an alert about tag operation errors of the upstream node if the second VLAN tag operation mode set is null.

6. The method according to claim 1, wherein the VLAN tag operation mode of the source node, the VLAN tag operation mode of the upstream node, the selected VLAN tag operation mode, the determined VLAN tag operation mode, and the obtained VLAN tag value are recorded into the NMS.

## Patentansprüche

1. Verfahren zum automatischen Verteilen von Ende-zu-Ende-802.1Q in 802.1Q- bzw. - QinQ-Servicetags, umfassend:
Bestimmen (5301) eines Quellknotens und eines Senkenknotens in einem Ende-zu-Ende-QinQ-Servicewegs und eines Virtual Local Area Network- bzw. VLAN-Tag-Betriebsmodus und eines VLAN-Tagwerts des Quellknotens, wobei ein erster VLAN-Tag-Betriebsmodussatz die Tag-Schaltung, die Tag-Weiterleitung und das Tag-Stripping umfasst; und
falls ein Knoten nicht der Senkenknoten ist (5305), Erfassen, durch ein Network Management System (NMS), eines zweiten VLAN-Tag-Betriebsmodussatzes für den Knoten durch Ausfiltern (5201, 5302) des VLAN-Tag-Betriebsmodus, der nicht auf den Knoten angewendet werden kann, aus dem ersten VLAN-Tag-Betriebsmodussatz gemäß dem VLAN-Tag-Betriebsmodus eines vorgeschalteten Knotens, Wählen (5202, 5303) eines VLAN-Tag-Betriebsmodus aus dem zweiten VLAN-Tag-Betriebsmodussatz für den Knoten, automatisches Erhalten (5203 5304) eines VLAN-Tagwerts gemäß dem VLAN-Tag-Betriebsmodus des vorgeschalteten Knotens und dem gewählten VLAN-Tag-Betriebsmodus und Einsetzen (5203, 5304) des erhaltenen VLAN-Tagwerts in eine Servicekonfiguration; oder
falls ein Knoten der Senkenknoten ist, Bestimmen, durch das NMS, eines VLAN-Tag-Betriebsmodus gemäß einer eineindeutigen Übereinstimmung zwischen dem VLAN-Tag-Betriebsmodus des Quellknotens und dem VLAN-Tag-Betriebsmodus des Senkenknotens, automatisches Erhalten (5203 5304) eines VLAN-Tagwerts gemäß einem VLAN-Tag-Betriebsmodus eines vorgeschalteten Knotens und dem bestimmten VLAN-Tag-Betriebsmodus und Einsetzen (5203, 5304) des erhaltenen VLAN-Tagwerts in eine Servicekonfiguration.

2. Verfahren nach Anspruch 1, wobei nach dem automatischen Erhalten des VLAN-Tagwerts und Einsetzen in die Servicekonfiguration das Verfahren weiterhin Folgendes umfasst:
Anzeigen des VLAN-Tagwerts einem Netzwerkoperator.

3. Verfahren nach Anspruch 2, wobei das Anzeigen des VLAN-Tagwerts dem Netzwerkoperator:
Anzeigen des VLAN-Tagwerts auf einer Betriebsschnittstelle des NMS im Nur-Lese-Modus ist.

4. Verfahren nach Anspruch 1, wobei das Wählen des VLAN-Tag-Betriebsmodus aus dem zweiten VLAN-Tag-Betriebsmodussatz Folgendes umfasst:
Wählen, manuell durch einen Netzwerkoperator, eines VLAN-Tag-Betriebsmodus aus dem zweiten VLAN-Tag-Betriebsmodussatz oder
Wählen, automatisch durch das NMS, eines VLAN-Tag-Betriebsmodus aus dem zweiten VLAN-Tag-Betriebsmodussatz.

5. Verfahren nach Anspruch 1, umfassend: Ausgeben einer Warnung über Tag-Betriebsfehler des vorgeschalteten Knotens, falls der zweite VLAN-Tag-Betriebsmodussatz null ist.

6. Verfahren nach Anspruch 1, wobei der VLAN-Tag-Betriebsmodus des Quellknotens, der VLAN-Tag-Betriebsmodus des vorgeschalteten Knotens, der gewählte VLAN-Tag-Betriebsmodus, der bestimmte VLAN-Tag-Betriebsmodus und der erhaltene VLAN-Tagwert in dem NMS aufgezeichnet werden.

## Revendications

1. Procédé permettant de distribuer automatiquement des étiquettes de service 802.1Q dans 802.1Q, QinQ, de bout en bout, comprenant les étapes suivantes :
déterminer (5301) un noeud source et un noeud récepteur dans un chemin de service QinQ de bout en bout, et un mode d'opération d'étiquette de réseau local virtuel, VLAN, et une valeur d'étiquette VLAN du noeud source, un premier ensemble de modes d'opération d'étiquette VLAN comprenant un changement d'étiquette, un transfert d'étiquette, et une suppression d'étiquette ; et
si un noeud n'est pas le noeud récepteur (5305), acquérir, par un système de gestion réseau (NMS), un deuxième ensemble de modes d'opération d'étiquette VLAN pour le noeud en filtrant (5201, 5302) le mode d'opération d'étiquette VLAN, qui ne peut pas être appliqué au noeud, à partir du premier ensemble de modes d'opération d'étiquette VLAN selon le mode d'opération d'étiquette VLAN d'un noeud en amont, sélectionner (5202, 5303) un mode d'opération d'étiquette VLAN à partir du deuxième ensemble de modes d'opération d'étiquette VLAN pour le noeud, obtenir (5203, 5304) une valeur d'étiquette VLAN automatiquement selon le mode d'opération d'étiquette VLAN du noeud en amont et le mode d'opération d'étiquette VLAN sélectionné, et remplir (5203, 5304) la valeur d'étiquette VLAN obtenue dans la configuration de service ; ou
si un noeud est le noeud récepteur, déterminer, par le NMS, un mode d'opération d'étiquette VLAN selon une correspondance biunivoque entre le mode d'opération d'étiquette VLAN du noeud source et le mode d'opération d'étiquette VLAN du noeud récepteur, obtenir (5203, 5304) une valeur d'étiquette VLAN automatiquement selon un mode d'opération d'étiquette VLAN d'un noeud en amont et le mode d'opération d'étiquette VLAN déterminé, et remplir (5203, 5304) la valeur d'étiquette VLAN obtenue dans la configuration de service.

2. Procédé selon la revendication 1, comprenant en outre, après que la valeur d'étiquette VLAN a été obtenue automatiquement et remplie dans la configuration de service, l'étape suivante :
afficher la valeur d'étiquette VLAN à un opérateur réseau.

3. Procédé selon la revendication 2, dans lequel l'étape consistant à afficher la valeur d'étiquette VLAN à l'opérateur réseau comprend :
afficher la valeur d'étiquette VLAN sur une interface d'exploitation du NMS, en mode lecture seule.

4. Procédé selon la revendication 1, dans lequel l'étape consistant à sélectionner le mode d'opération d'étiquette VLAN à partir du deuxième ensemble de modes d'opération d'étiquette VLAN comprend :
sélectionner manuellement, par un opérateur réseau, un mode d'opération d'étiquette VLAN à partir du deuxième ensemble de modes d'opération d'étiquette VLAN ; ou
sélectionner automatiquement, par le NMS, un mode d'opération d'étiquette VLAN à partir du deuxième ensemble de modes d'opération d'étiquette VLAN.

5. Procédé selon la revendication 1, comprenant l'étape suivante : donner une alerte concernant des erreurs d'opération d'étiquette du noeud en amont si le deuxième ensemble de modes d'opération d'étiquette VLAN est nul.

6. Procédé selon la revendication 1, dans lequel le mode d'opération d'étiquette VLAN du noeud source, le mode d'opération d'étiquette VLAN du noeud en amont, le mode d'opération d'étiquette VLAN sélectionné, le mode d'opération d'étiquette VLAN déterminé, et la valeur d'étiquette VLAN obtenue sont enregistrés dans le NMS.
